# EUROPEAN PATENT APPLICATION

(11) **EP 1 879 375 A2**
(43) Date of publication of application: **16.01.2008**
(21) Application number: 07103224.7
(22) Date of filing: 28.02.2007
(51) Int. Cl.: H04N 1/405, H04N 1/409

(54) **Halftoning method and apparatus**

(30) Priority: 11.07.2006 KR 20060064855
(71) Applicant: Samsung Electronics Co., Ltd., Suwon-si 442-742 Gyeonggi-do (KR)
(72) Inventor: Lee, Hae-kee, Gyeonggi-do (KR)
(74) Representative: Walaski, Jan Filip

(57) **Abstract**

A halftoning method to improve the sharpness of a boundary region, including detecting a direction of the boundary region, selecting a halftone table indicating a direction that is closest to a direction perpendicular to the detected direction from among predetermined halftone tables, and halftoning the pixel data using the selected halftone table, and an apparatus to perform the method.

## Description

The present invention relates to a halftoning method and apparatus to improve a sharpness of a boundary region of a halftone image.

Halftoning refers to changing a number of available gradations of image data. Gradation refers to a concentration level of an image. In image data generated by a host, such as a personal computer (PC), each pixel data has a gradation value of 0-255. In contrast, in image data output from an image forming apparatus that presents the image data in only black and white, each pixel data has a gradation value of 0 or 1. Thus, when an image forming apparatus receives image data from a host and prints the received image data, halftoning to change a gradation of each pixel data value is needed. That is, a halftoning technique is used to change a gray scale image to a binary image and is used by an image forming apparatus (such as a printer or multifunctional apparatus) or a display device, which displays a pixel with an on or off value only).

There are many halftoning methods, one of which is a method using a clustered halftone table. In the halftoning method using a clustered halftone table, a number of printed dots from a certain center are gradually increased toward the certain center's surrounding area. In a conventional halftoning method using a clustered halftone table, halftoning is performed using the same halftone table regardless of whether a printed portion is a boundary region or not. Thus, the boundary region is not clearly distinguished from the surrounding area, which means the boundary region is not clearly printed. Also, since there is no method for selecting a halftone table corresponding to a direction of a boundary region, boundary regions in different directions experience varying sharpness.

The present invention provides a halftoning method and apparatus to distinguish a boundary region from a non-boundary region in image data printed by an image forming apparatus and to print the boundary region more clearly than the non-boundary region. Also, a computer-readable recording medium including a program to execute the method on a computer is provided.

Additional aspects and advantages of the present invention will be set forth in part in the description which follows and, in part, will be obvious from the description, or may be learned by practice of the invention.

The foregoing and/or other aspects and utilities of the present invention may be achieved by providing a method of halftoning pixel data indicated as being a boundary region, the method including detecting a direction of the boundary region, selecting a halftone table indicating a direction that is closest to a direction perpendicular to the detected direction from among predetermined halftone tables, and halftoning the pixel data using the selected halftone table.

The foregoing and/or other aspects and utilities of the present invention may also be achieved by providing a halftoning method, including determining input image data to be first pixel data indicated as being a predetermined boundary region or second pixel data indicated as being a non-boundary region, when the input image data is determined to be first pixel data, detecting a direction of the predetermined boundary region and selecting a halftone table indicating a direction that is closest to a direction perpendicular to the detected direction, from among predetermined halftone tables, and halftoning the first pixel data using the selected halftone table.

The foregoing and/or other aspects and utilities of the present invention may also be achieved by providing a computer-readable recording medium recording a program a halftoning method.

The foregoing and/or other aspects and utilities of the present invention may also be achieved by providing an apparatus to halftone pixel data indicated as being a boundary region, the apparatus including a boundary direction detection portion to detect a direction of the boundary region, a halftone table selection portion to select a halftone table indicating a direction that is closest to a direction perpendicular to the detected direction from among predetermined halftone tables, and a halftoning processing portion to halftone the pixel data using the selected halftone table.

The foregoing and/or other aspects and utilities of the present invention may also be achieved by providing a halftoning apparatus, including a pixel data determination portion to determine received image data to be a first pixel data indicated being as a predetermined boundary region or a second pixel data indicated as being a non-boundary region, a first halftone table selection portion to detect a direction of the predetermined boundary region and to select a halftone table indicating a direction that is closest to a direction perpendicular to the detected direction from among predetermined halftone tables when the input image data is determined to be first pixel data, a second halftoning table selection portion to select a round type halftoning table that does not indicate a particular direction when the input image data is determined to be second pixel data, and a halftoning processing portion to halftone the first pixel data using the selected halftone table.

The foregoing and/or other aspects and utilities of the present invention may also be achieved by providing a halftoning method to modify a sharpness of a boundary region of received image data, the method including detecting and distinguishing the boundary region from a non-boundary region of the received image data, determining a direction of the boundary region, and selecting a first halftone table for the boundary region corresponding to the direction of the boundary region, and selecting a second halftone table for the non-boundary region that is different from the first halftone table.

The detecting and distinguishing of the boundary region may include detecting a plurality of boundary regions having a corresponding plurality of directions, and the selecting of the first halftone table may include selecting a small halftone table to perform halftoning corresponding to each of the boundary regions. The detecting and distinguishing, the determining, and the selecting operations may be performed within an image forming apparatus, and the first and second halftone tables may be selected from a plurality of predetermined halftone tables. The plurality of predetermined halftone tables may be stored externally to the image forming apparatus.

The selecting of the first halftone table may include determining whether a halftone table indicating a direction perpendicular to the determined direction of the boundary region is present among a plurality of predetermined halftone tables, selecting the halftone table indicating the direction perpendicular to the determined direction of the boundary region when the halftone table indicating the direction perpendicular to the determined direction of the boundary region is present among the plurality of predetermined halftone tables, and selecting a halftone table indicating a direction closest to the perpendicular direction when the halftone table indicating the direction perpendicular to the determined direction of the boundary region is not present among the plurality of predetermined halftone tables.

The halftoning method may further include halftoning pixel data of the boundary region of the received image data using the selected first halftone table. The first halftone table may be a table selected from a round type halftone table, a vertical halftone table, a horizontal halftone table, and a diagonal halftone table. The second halftone table may be a round type halftone table, and the first halftone table may be a table selected from a vertical halftone table, a horizontal halftone table, and a diagonal halftone table.

The foregoing and/or other aspects and utilities of the present invention may also be achieved by providing an apparatus to modify a sharpness of a boundary region of received image data, the apparatus including a boundary direction detecting unit to detect and distinguish the boundary region from a non-boundary region of the received image data, and to determine a direction of the boundary region, and a halftone table selecting unit to select a first halftone table for the boundary region corresponding to the direction of the boundary region, and to select a second halftone table for the non-boundary region that is different from the first halftone table.

The boundary direction detecting unit may detect a plurality of boundary regions having a corresponding plurality of directions, and the halftone table selecting unit may select a small halftone table to perform halftoning corresponding to each of the boundary regions. The halftone table selecting unit may select the first and second halftone tables from a plurality of predetermined halftone tables. The plurality of predetermined halftone tables may be stored externally to the image forming apparatus. The apparatus may further include a halftone table storing unit to store the plurality of predetermined halftone tables within the image forming apparatus.

The halftone table selecting unit may determine whether a halftone table indicating a direction perpendicular to the determined direction of the boundary region is present among a plurality of predetermined halftone tables, may select the halftone table indicating the direction perpendicular to the determined direction of the boundary region when the halftone table indicating the direction perpendicular to the determined direction of the boundary region is present among the plurality of predetermined halftone tables, and may select a halftone table indicating a direction closest to the perpendicular direction when the halftone table indicating the direction perpendicular to the determined direction of the boundary region is not present among the plurality of predetermined halftone tables.

The apparatus may further include a halftoning processing unit to halftone pixel data of the boundary region of the received image data using the selected first halftone table. The first halftone table may be a table selected from a round type halftone table, a vertical halftone table, a horizontal halftone table, and a diagonal halftone table. The second halftone table may be a round type halftone table, and the first halftone table may be a table selected from a vertical halftone table, a horizontal halftone table, and a diagonal halftone table.

These and/or other aspects and advantages of the present invention will become apparent and more readily appreciated from the following description of the embodiments, taken in conjunction with the accompanying drawings of which:
FIG. 1 is a block diagram illustrating a halftoning apparatus to improve a sharpness of a boundary region, according to an embodiment of the present invention;
FIG. 2 is a block diagram illustrating a halftoning apparatus to improve a sharpness of a boundary region, according to another embodiment of the present invention;
FIG. 3 is a flowchart illustrating a halftoning method to improve a sharpness of a boundary region, according to an embodiment of the present invention;
FIG. 4 is a flowchart illustrating a halftoning method to improve a sharpness of a boundary region, according to another embodiment of the present invention;
FIGS. 5A through 5E are views illustrating characteristics of halftone tables, according to embodiments of the present invention;
FIGS. 6A through 6E are views illustrating arrays of printed dots when the halftone tables of FIGS. 5A through 5E are used, according to embodiments of the present invention;
FIG. 7A is a view illustrating an array of printed dots when a direction of a boundary region is vertical, according to a conventional halftoning method; and
FIG. 7B is a view illustrating an array of printed dots when a direction of a boundary region is vertical, according to an embodiment of the present invention.

Reference will now be made in detail to the embodiments of the present invention, examples of which are illustrated in the accompanying drawings, wherein like reference numerals refer to the like elements throughout. The embodiments are described below in order to explain the present invention by referring to the figures.

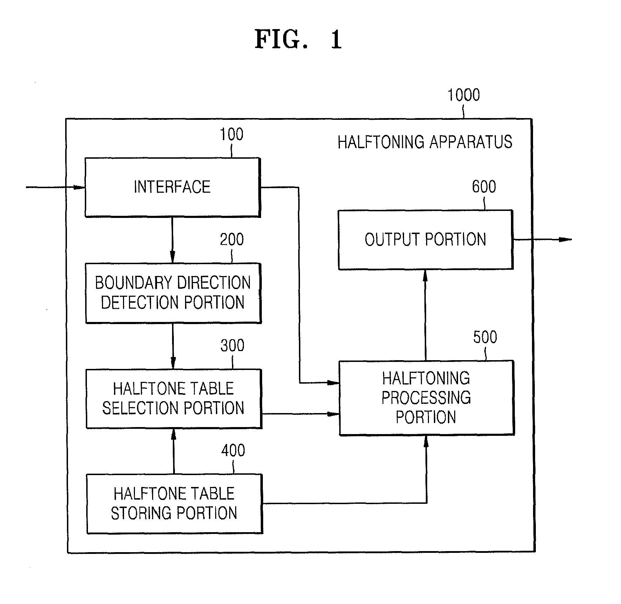

FIG. 1 is a block diagram illustrating a halftoning apparatus 1000 to improve a sharpness of a boundary region, according to an embodiment of the present invention. Referring to FIG. 1, the halftoning apparatus 1000 according to the present embodiment includes an interface 100, a boundary direction detection portion 200, a halftone table selection portion 300, a halftone table storing portion 400, a halftoning processing portion 500, and an output portion 600.

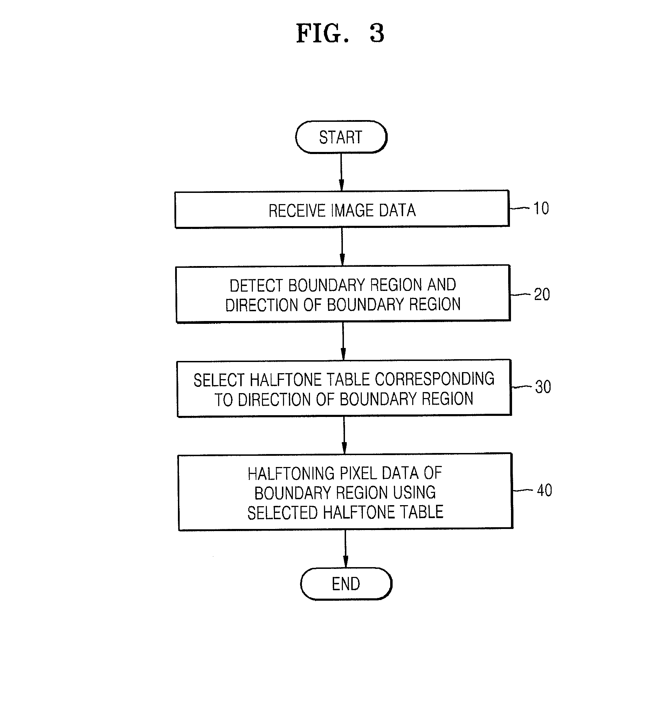

FIG. 3 is a flowchart illustrating a halftoning method to improve a sharpness of a boundary region, according to an embodiment of the present invention. Referring to FIGS. 1 and 3, an operation of the halftoning apparatus 1000 to improve the sharpness of a boundary region will be described below.

The halftoning apparatus 1000 may be, for example, an image forming apparatus. In this case, and as illustrated in FIG. 1, the interface 100 receives image data from outside of the halftoning apparatus 1000 in operation 10. However, since halftoning can be performed not only by an image forming apparatus, but also by a host, such as a personal computer (PC), the halftoning apparatus 1000 may be a host, such as a PC. When the halftoning apparatus 1000 is a host that performs halftoning, image data generated from inside of the halftoning apparatus 1000 can be used without receiving image data from outside thereof.

The boundary direction detection portion 200 detects a boundary region and a direction of the boundary region in the image data in operation 20. The boundary region signifies a portion printed by shade when printed by an image forming apparatus. Also, the direction indicated by a shape of the boundary region signifies a direction implied by a boundary region having a certain shape. Thus, the image data is classified into a variety of boundary regions and each boundary region may lie in a different direction. The boundary region can be detected using, for example, a contour detection algorithm. The contour can be detected using, for example, a change in a brightness value by a differential operator. The contour detection algorithm may be, for example, a Sobel, Prewitt, Robert, Laplacian, or Canny algorithm, or any algorithm that can be used as a contour detection algorithm. The boundary direction detection portion 200 detects the direction of the boundary region using the contour detected as the boundary region. That is, a size of a gradient that is a differential operator at a coordinate (x,y) and an inclination at the coordinate (x,y) are obtained. A row detector Hr and a column detector Hc are obtained from the gradient and inclination so that an area and direction of a contour can be obtained.

The halftone table selection portion 300 selects a halftone table corresponding to the direction of the boundary region detected in operation 20 from among halftone tables stored in the halftone table storing portion 400 in operation 30. When a plurality of boundary regions having various directions are detected from the image data, it is advantageous to select a small halftone table to perform halftoning corresponding to each of the boundary regions. In the present embodiment, although the halftone table is stored in the halftoning apparatus 1000, the present invention is not limited thereto, and thus the halftone table can be provided from outside of the halftoning apparatus.

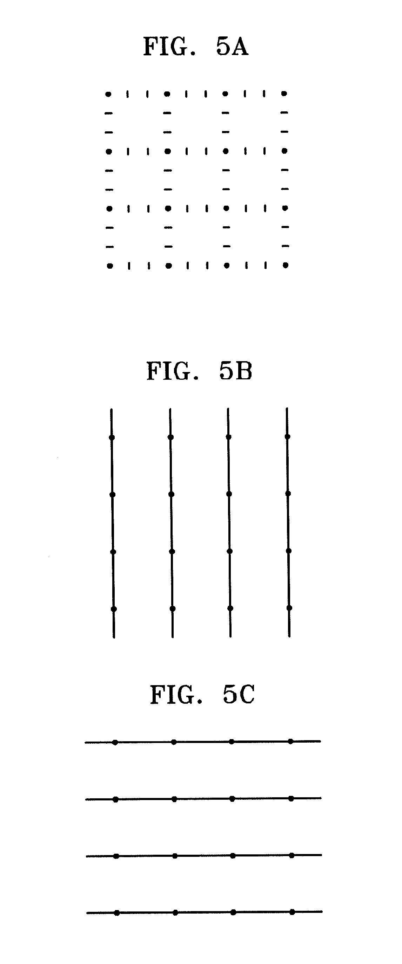

FIGS. 5A through 5E are views illustrating characteristics of halftone tables, according to embodiments of the present invention.

FIG. 5A is a view illustrating an array of centers that are references of halftone tables used in the present embodiment. In the present embodiment, the centers that are used as references to generate a halftone table are arranged in a 3×3 matrix. When the respective centers are arranged in a 3×3 matrix, a shape of the array of centers is illustrated in FIG. 5A. That is, the respective centers are arranged at an interval of three pixels in all directions as illustrated in FIG. 5A.

FIG. 5B is a view illustrating a halftone table in which the centers are connected in a vertical direction with respect to FIG. 5A. The halftone table indicating the vertical direction of FIG. 5B can be obtained by connecting the centers arranged vertically from the center arranged at the same interval in FIG. 5A.

FIG. 5C is a view illustrating a halftone table in which the centers are connected in a horizontal direction with respect to FIG. 5A. The halftone table indicating the horizontal direction of FIG. 5C can be obtained by connecting the centers arranged horizontally from the center arranged at the same interval in FIG. 5A.

FIG. 5D is a view illustrating a halftone table in which the centers are connected in a direction inclined clockwise by 45° with respect to the vertical direction of FIG. 5A. The halftone table indicating a direction inclined clockwise by 45° with respect to the vertical direction as illustrated in FIG. 5D can be obtained by connecting the neighboring centers arranged in the upper right direction from the centers arranged at the same interval in FIG. 5A.

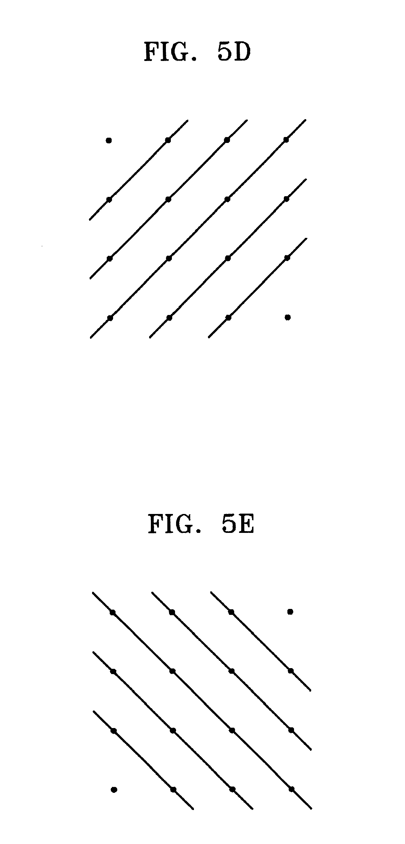

FIG. 5E is a view illustrating a halftone table in which centers are connected in a direction inclined counterclockwise by 45° with respect to the vertical direction of FIG. 5A. The halftone table indicating a direction inclined counterclockwise by 45° with respect to the vertical direction as illustrated in FIG. 5E can be obtained by connecting the neighboring centers arranged in the upper right direction from the centers arranged at the same interval in FIG. 5A.

Referring back to FIG. 3, the halftone table selection portion 300 selects a halftone table indicating a direction perpendicular to a direction of the boundary region, or a halftone table indicating a direction that is closest to the perpendicular direction, from among the halftone tables of FIG. 5B through 5E stored in the halftone table storing portion 400 in operation 30. When the direction of the boundary region is vertical, a halftone table indicating a horizontal direction to form a right angle with the vertical direction is selected. When the direction of the boundary region is horizontal, a halftone table indicating a vertical direction to form a right angle with the horizontal direction is selected. Also, when the direction of the boundary direction has a certain angle with the horizontal direction other than being perpendicular thereto, a halftone table indicating a direction forming an angle of 90° with the direction having the certain angle is selected.

That is, when a halftone table indicating a direction perpendicular to the direction of the boundary region exists, the halftone table is selected. When such a halftone table does not exist, a halftone table indicating a direction that illustrates a closest angle to the direction perpendicular to the direction of the boundary region is selected. For example, when the direction of the boundary region forms an angle of 10° in a counterclockwise direction from the horizontal direction, a direction perpendicular to the direction of the boundary region is a direction forming an angle of 10° in the counterclockwise direction from the vertical direction. Thus, when a halftone table indicating such a direction (i.e., the direction forming an angle of 10° in the counterclockwise direction from the vertical direction) exists, the halftone table is selected. However, when only halftone tables indicating the horizontal and vertical directions exist, a halftone table indicating the vertical direction that is the closest to the direction forming an angle of 10° counterclockwise from the horizontal direction is selected.

The halftoning processing portion 500 halftones pixel data of the boundary region of the received image data using the halftone table selected by the halftone table selection portion 300 in operation 40. The halftoned pixel data is output from the halftoning apparatus 1000 through the output portion 600. An image forming apparatus according to the present embodiment can form an image by outputting the halftoned pixel data.

FIGS. 6A through 6E are views illustrating arrays of printed dots when the halftone tables of FIGS. 5A through 5E are used, according to embodiments of the present invention. The image data output from the halftoning apparatus 1000 and printed will be described with reference to FIG. 1 and FIGS. 6A through 6E.

FIG. 6A is a view illustrating an array of dots to be output from the halftoning apparatus 1000 and printed when a round type halftone table is used. The round type halftone table signifies that the dots are presented at the same interval, but not indicated in a particular direction (as illustrated in FIG. 5A). In the image data output after the halftone processing, all dots adjacent to corners of each dot are printed, as illustrated in FIG. 6A, using the round type halftone table. That is, dots that are not adjacent are printed in the horizontal and vertical directions.

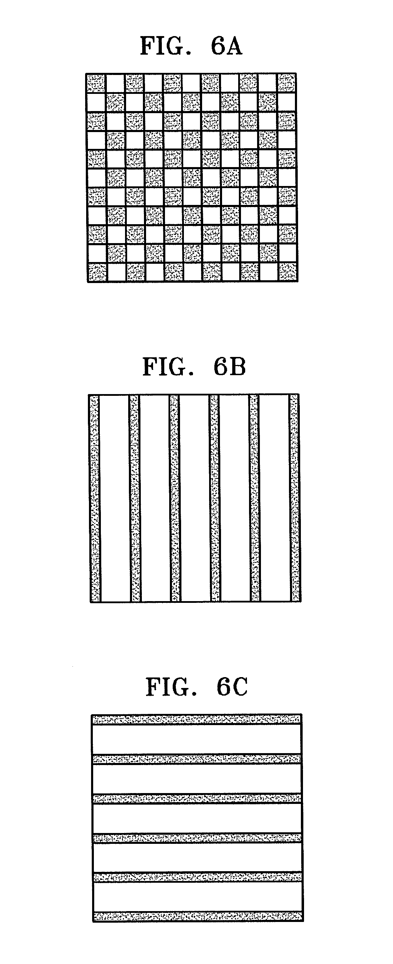

FIG. 6B is a view illustrating an array of dots to be output from the halftoning apparatus 1000 by the halftone table selected in the present embodiment when the direction of the boundary region is horizontal. When the halftone table indicating the vertical direction is used (as illustrated in FIG. 5B), since dots arranged in the vertical direction are continuously printed, as illustrated in FIG. 6B, a plurality of vertical lines are printed parallel to one another and are separated from one another at a predetermined interval.

FIG. 6C is a view illustrating an array of dots to be output from the halftoning apparatus 1000 by the halftone table selected in the present embodiment when the direction of the boundary region is vertical. When the halftone table indicating the horizontal direction is used (as illustrated in FIG. 5C), since dots arranged in the horizontal direction are continuously printed, as illustrated in FIG. 6C, a plurality of horizontal lines are printed parallel to one another at a predetermined interval.

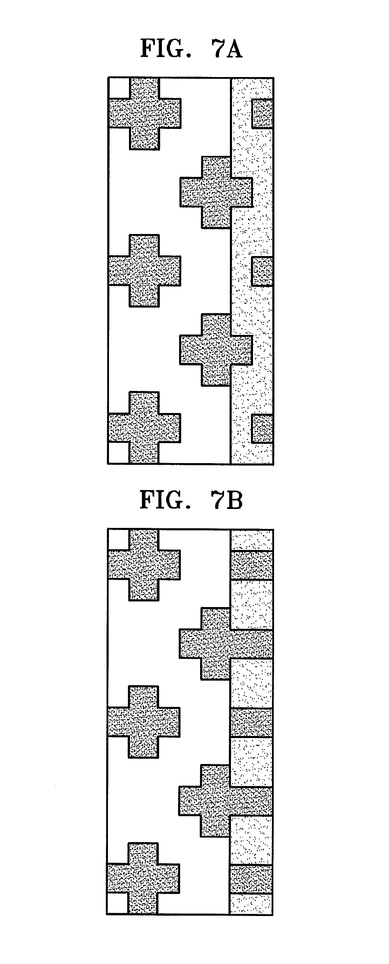

The present invention will be described in detail with reference to FIGS. 7A and 7B. FIG. 7A is a view illustrating an array of printed dots when a direction of a boundary region is vertical, according to a conventional halftoning method. FIG. 7B is a view illustrating an array of printed dots when a direction of a boundary region is vertical, according to an embodiment of the present invention.

In FIG. 7A, a portion containing light shading is the boundary region and the direction of the boundary region is vertical. When a clustered halftone table is conventionally used for the boundary region and a non-boundary region, an entire region to be printed, including the boundary region, is printed with the same dot array and number of dots, as illustrated in FIG. 7A. However, when the halftone table indicating a horizontal direction (for example, as illustrated in FIG. 6C) is used in the vertical boundary region, according to the present embodiment, the boundary region as illustrated in FIG. 7B is printed with a dot array and number of dots that are different from those of the non-boundary region. That is, in comparison with FIG. 7A, since twice the number of dots is used to print the boundary region in FIG. 7B, the boundary region is more emphasized (i.e., more clear) than the non-boundary region. Since the halftone table indicating the horizontal direction is used in the vertical boundary region, dots are arranged horizontally and printed.

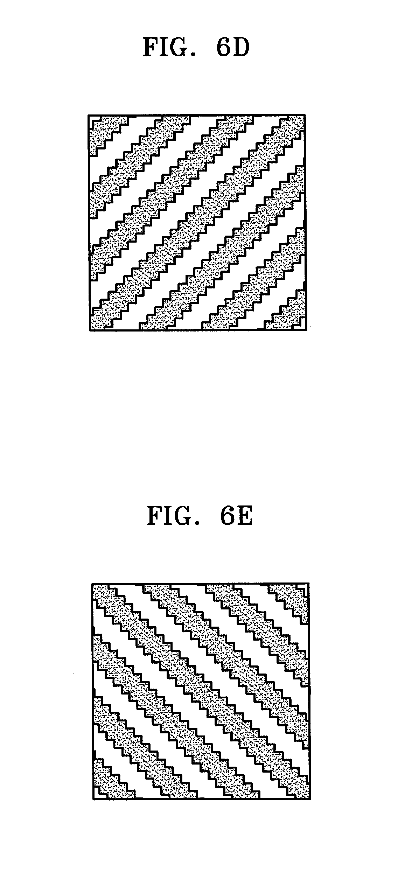

Referring back to FIGS. 6D and 6E, the array of dots output to outside of the halftoning apparatus 100 is illustrated when a halftone table indicating a direction forming an angle of 45° clockwise and counterclockwise to the horizontal direction is used.

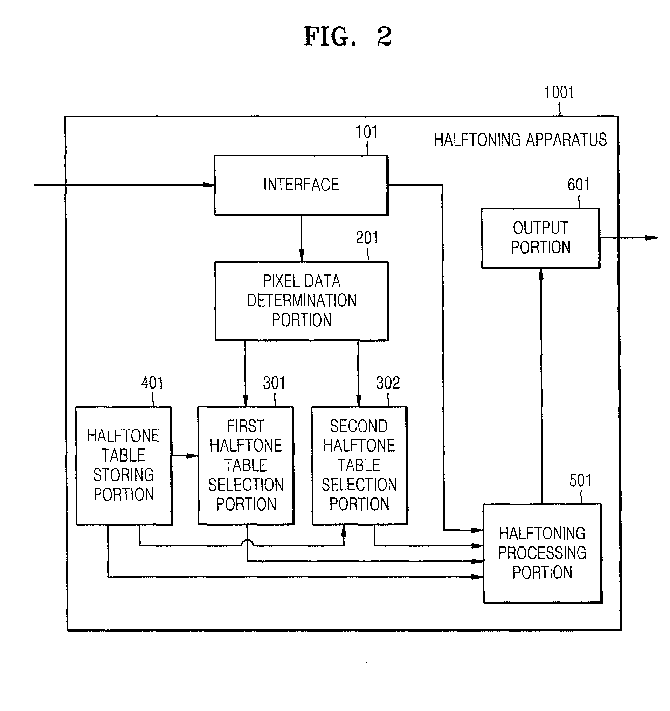

FIG. 2 is a block diagram illustrating a halftoning apparatus 1001 to improve a sharpness of a boundary region, according to another embodiment of the present invention. Referring to FIG. 2, the halftoning apparatus 1001 according to the present embodiment includes an interface 101, a pixel data determination portion 201, a first halftone table selection portion 301, a second halftone table selection 302, a halftone table storing portion 401, a halftoning processing portion 501, and an output portion 601.

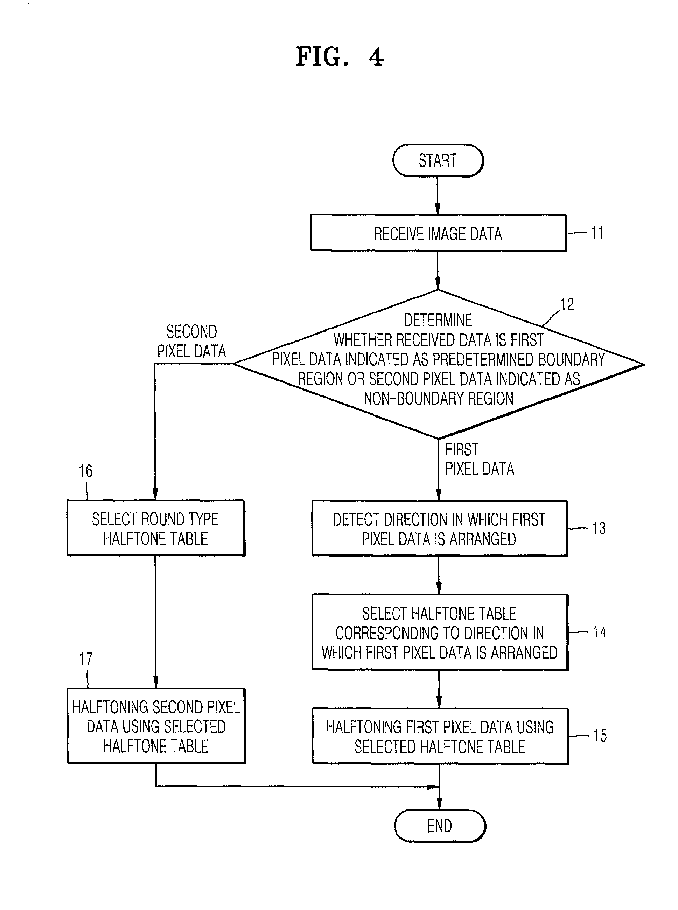

FIG. 4 is a flowchart illustrating a halftoning method to improve a sharpness of a boundary region, according to another embodiment of the present invention. Referring to FIGS. 2 and 4, an operation of the halftoning apparatus 1001 of FIG. 2 will be described below.

The halftoning apparatus 1001 may be, for example, an image forming apparatus. In this case, as illustrated in FIG. 2, the interface 101 receives image data from outside of the halftoning apparatus 1001 in operation 11. However, since halftoning can be performed not only by an image forming apparatus, but also by a host, such as a personal computer (PC), the halftoning apparatus 1001 may be a host, such as a PC. When the halftoning apparatus 1001 is a host that performs halftoning, image data generated from inside of the halftoning apparatus 1001 can be used without receiving image data from outside thereof.

The pixel data determination portion 201 determines input pixel data to be first pixel data indicated as being a predetermined boundary region or second pixel data indicated as being a non-boundary region in operation 12. The boundary region and the non-boundary region can be determined using, for example, a contour detection algorithm. The contour can be obtained using, for example, a change in the value of brightness by a differential operator. The contour detection algorithm may be, for example, a Sobel, Prewitt, Robert, Laplacian, or Canny algorithm, or any algorithm that can be used as the contour detection algorithm. The boundary direction detection portion 200 of FIG. 1 detects a direction of the boundary region using the detected contour of the boundary region. That is, a size of gradient that is a differential operator at a coordinate (x,y) and an inclination at the coordinate (x,y) are obtained. A row detector Hr and a column detector Hc are obtained from the above obtained values so that an area and direction of a contour can be obtained.

The pixel data determination portion 201 detects the direction of the boundary region through an array of the pixel data determined as being a boundary region in operation 13. The first halftone table selection portion 301 selects a halftone table corresponding to the direction of the boundary region through the array of the pixel data determined as being a boundary region in operation 14. The first halftone table selection portion 300 selects a halftone table corresponding to the direction of the boundary region detected in operation 13, from among the halftone tables stored in the halftone table storing portion 400. The process of selecting a halftone table is the same as operation 30 of FIG. 3 according to the previous embodiment. In the present embodiment, although a halftone table is stored in the halftoning apparatus, the present invention is not limited thereto, and thus the halftone can be received from outside of the halftoning apparatus. The halftoning processing portion 501 extracts the halftone table selected by the first halftone table selection portion 301 from the halftone table storing portion 401 and halftones the first pixel data corresponding to the boundary region in operation 15.

Independent of operation 13, the second halftone table selection portion 302 selects a round type halftone table that does not indicate a particular direction with respect to the area indicated as being a non-boundary region in operation 16. The halftoning processing portion 501 extracts the round type halftoning table selected by the second halftone table selection portion 302 from the halftone table storing portion 401 and halftones the pixel data of the non-boundary region in operation 17.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves such as data transmission through the Internet. The computer readable recording medium can also be distributed over network coupled computer systems so that the computer readable code is stored and executed in a distributed fashion.

As described above, a halftoning method and apparatus to improve a sharpness of a boundary region, according to embodiments of the present invention, performs halftoning using different halftone tables by determining an area indicated being as a boundary region and an area indicated as being a non-boundary region of pixel data. Also, for the boundary region, an effect of improving the sharpness of the boundary region by emphasizing the boundary region by differentiating an array and a number of dots printed in the boundary region in a halftoning method of selecting a halftone table indicating a closest direction to a direction perpendicular to the direction of the boundary region.

Although a few embodiments of the present invention have been shown and described, it will be appreciated by those skilled in the art that changes may be made in these embodiments without departing from the principles of the invention, the scope of which is defined in the appended claims.

## Claims

1. A method of halftoning pixel data indicated as being a boundary region, the method comprising:
determining a direction of the boundary region;
selecting a halftone table indicating a direction that is closest to a direction perpendicular to the determined direction from among predetermined halftone tables; and
halftoning the pixel data using the selected halftone table.

2. The method of claim 1, wherein selecting a halftone table comprises:
selecting a halftone table indicating a horizontal direction when the direction of the boundary region is vertical.

3. The method of claim 1 or 2, wherein selecting a halftone table comprises:
selecting a halftone table indicating a vertical direction when the direction of the boundary region is horizontal.

4. The method of any one of the preceding claims, wherein selecting a halftone table comprises:
selecting a halftone table indicating a direction that forms an angle of 90° with a direction indicated by a predetermined angle with a horizontal direction when the direction of the boundary region has a difference of the predetermined angle with the horizontal direction.

5. The method of any one of the preceding claims, comprising:
determining input image data to be pixel data indicated as being a boundary region or pixel data indicated as being a non-boundary region.

6. The method of claim 5, further comprising:
when the input image data is determined to be pixel data indicated as being a non-boundary region, selecting a round type halftone table that does not indicate a particular direction; and
halftoning the non-boundary region pixel data using the round type halftone table.

7. A computer program which when executed by a processor is arranged to perform a method according to any one of the preceding claims.

8. An apparatus for halftoning pixel data indicated as being a boundary region, the apparatus comprising:
a boundary direction detection portion for determining a direction of the boundary region;
a halftone table selection portion for selecting a halftone table indicating a direction that is closest to a direction perpendicular to the determined direction from among predetermined halftone tables; and
a halftoning processing portion for halftoning the pixel data using the selected halftone table.

9. The apparatus of claim 8, further comprising:
a pixel data determination portion for determining received image data to be pixel data indicated as being a predetermined boundary region or pixel data indicated as being a non-boundary region.

10. The apparatus of claim 9, further comprising:
a second halftoning table selection portion for selecting a round type halftoning table that does not indicate a particular direction; and
a halftoning processing portion to halftone the non-boundary pixel data using the selected second halftoning table.

11. A halftoning method for processing received image data having a boundary region, the method comprising:
distinguishing the boundary region from a non-boundary region of the received image data;
determining a direction of the boundary region; and
selecting a first halftone table for the boundary region in dependence on the direction of the boundary region, and selecting a second halftone table for the non-boundary region that is different from the first halftone table.

12. The halftoning method of claim 11, wherein:
the distinguishing of the boundary region comprises detecting a plurality of boundary regions having a corresponding plurality of directions; and
the selecting of the first halftone table comprises selecting a small halftone table to perform halftoning corresponding to each of the boundary regions.

13. The halftoning method of claim 11 or 12, wherein the selecting of the first halftone table comprises:
determining whether a halftone table indicating a direction perpendicular to the determined direction of the boundary region is present among a plurality of predetermined halftone tables;
selecting the halftone table indicating the direction perpendicular to the determined direction of the boundary region when the halftone table indicating the direction perpendicular to the determined direction of the boundary region is present among the plurality of predetermined halftone tables; and
selecting a halftone table indicating a direction closest to the perpendicular direction when the halftone table indicating the direction perpendicular to the determined direction of the boundary region is not present among the plurality of predetermined halftone tables.

14. The halftoning method of any one of claims 11 to 13, further comprising:
halftoning pixel data of the boundary region of the received image data using the selected first halftone table.

15. The halftoning method of any one of claims 11 to 14, wherein the first halftone table is a table selected from the group consisting of a round type halftone table, a vertical halftone table, a horizontal halftone table, and a diagonal halftone table.

16. The halftoning method of any one of claims 11 to 15, wherein the second halftone table is a round type halftone table, and the first halftone table is a table selected from the group consisting of a vertical halftone table, a horizontal halftone table, and a diagonal halftone table.

17. An apparatus for processing received image data having a boundary region, the apparatus comprising:
a boundary direction determining unit for distinguishing the boundary region from a non-boundary region of the received image data, and for determining a direction of the boundary region; and
a halftone table selecting unit for selecting a first halftone table for the boundary region in dependence on the direction of the boundary region, and for selecting a second halftone table for the non-boundary region that is different from the first halftone table.

18. The apparatus of claim 17, wherein:
the boundary direction determining unit is arranged to detect a plurality of boundary regions having a corresponding plurality of directions; and
the halftone table selecting unit is arranged to select a small halftone table to perform halftoning corresponding to each of the boundary regions.

19. The apparatus of claim 17 or 18, wherein:
the halftone table selecting unit is arranged to select the first and second halftone tables from a plurality of predetermined halftone tables.

20. The apparatus of claim 19, wherein:
the plurality of predetermined halftone tables are stored externally to the apparatus.

21. The apparatus of claim 19, further comprising:
a halftone table storing unit for storing the plurality of predetermined halftone tables within the apparatus.

22. The apparatus of claim 19, 20 or 21, wherein the halftone table selecting unit determines whether a halftone table indicating a direction perpendicular to the determined direction of the boundary region is present among a plurality of predetermined halftone tables, selects the halftone table indicating the direction perpendicular to the determined direction of the boundary region when the halftone table indicating the direction perpendicular to the determined direction of the boundary region is present among the plurality of predetermined halftone tables, and selects a halftone table indicating a direction closest to the perpendicular direction when the halftone table indicating the direction perpendicular to the determined direction of the boundary region is not present among the plurality of predetermined halftone tables.

23. The apparatus of any one of claims 17 to 22, further comprising:
a halftoning processing unit to halftone pixel data of the boundary region of the received image data using the selected first halftone table.

24. The apparatus of any one of claims 17 to 23, wherein the first halftone table is a table selected from the group consisting of a round type halftone table, a vertical halftone table, a horizontal halftone table, and a diagonal halftone table.

25. The apparatus of any one of claims 17 to 24, wherein the second halftone table is a round type halftone table, and the first halftone table is a table selected from the group consisting of a vertical halftone table, a horizontal halftone table, and a diagonal halftone table.
